# EUROPÄISCHE PATENTANMELDUNG

(11) **EP 1 216 863 A2**
(43) Veröffentlichungstag der Anmeldung: **26.06.2002**
(21) Anmeldenummer: 01129716.5
(22) Anmeldetag: 13.12.2001
(51) Int. Cl.: B60H 1/00

(54) **Sonnensensor für Kraftfahrzeugklimaanlagen**

(30) Priorität: 16.12.2000 DE 10062932
(71) Anmelder: SIEMENS AKTIENGESELLSCHAFT, 80333 München (DE)
(72) Erfinder: Prantl, Michael, 64289 Darmstadt (DE); Rump, Stefan, 61184 Karben (DE)

(57) **Zusammenfassung**

Die Erfindung betrifft einen auch als Sonnensensor bekannten Signalgeber für ein Regelgerät einer Kraftfahrzeugklimaanlage, wobei der Sonnensensor (1) einen elektrooptischen Wandler (16) und eine strahlungsdurchlässige Abdeckung (17) des elektrooptischen Wandlers (16) aufweist. Erfindungsgemäß ist vorgesehen, dass die strahlungsdurchlässige Abdekkung (17) einen Streubereich (18) für einfallendes Sonnenlicht enthält.

## Beschreibung

Die Erfindung betrifft einen Signalgeber für ein Regelgerät einer Kraftfahrzeugklimaanlage, der einen elektrooptischen Wandler und eine strahlungsdurchlässige Abdeckung des elektrooptischen Wandlers aufweist.

Entsprechende Signalgeber sind beispielsweise aus der DE 39 22 153 C2 und der EP 0 492 352 A2 bekannt. Ein solcher Signalgeber für Kraftfahrzeugklimaanlagen wird auch als Sonnensensor bezeichnet. Aufgabe des Sonnensensors ist es, der Regeleinrichtung der Klimaanlage ein Signal zuzuführen, das Rückschlüsse auf die Sonneneinstrahlung in das Fahrzeuginnere erlaubt. Um ein möglichst konstantes elektrisches Ausgangssignal des elektrooptischen Wandlers für einen möglichst großen Lichteinfallsbereich zu erzielen, wird in den oben genannten Schriften vorgeschlagen, dem elektrooptischen Wandler eine Linse zuzuordnen. Wie auch bereits in der EP 0 492 352 A2 ausgeführt ist, erweist sich die Montage und der Anschluß des Sonnensensors nach der DE 39 22 153 C2 als besonders schwierig. Bei dem in der EP 0 492 352 A2 vorgeschlagenen Sonnensensor ist daher die Linse Teil eines Gehäuses aus einem lichtdurchlässigen Material. Auch hier ist es jedoch erforderlich, die Konturen und damit die Wirkung der Linse an die speziellen Gegebenheiten anzupassen.

Aufgabe der Erfindung ist es daher, einen Signalgeber anzugeben, der einfach und kostengünstig herstellbar ist.

Die Aufgabe wird bei einem gattungsgemäßen Signalgeber dadurch gelöst, dass die strahlungsdurchlässige Abdeckung einen Streubereich für einfallendes Sonnenlicht enthält. Ein solcher Streubereich läßt sich bei der Herstellung der Abdeckung auf relativ einfache Weise herstellen. Eine spezielle Kontur, wie sie zur Herstellung einer Linse in einer Abdeckung erforderlich ist, ist entbehrlich. Insbesondere ist eine Anpassung an unterschiedliche Anforderungen durch eine Vergrößerung oder Verkleinerung des Streubereiches möglich. Durch einen Streubereich in der Abdeckung kann eine Linearisierung des Ausgangssignals des elektrooptischen Wandlers erreicht werden.

Vorzugsweise sind der Streubereich und der elektrooptische Wandler derart zueinander angeordnet, dass in einem ersten Lichteinfallswinkelbereich einfallendes Sonnenlicht durch den Streubereich gestreut wird, bevor es auf den Wandler auftrifft. Hierdurch wird erreicht, dass Sonnenlicht vor dem Auftreffen auf den elektrooptischen Wandler nur dann gestreut wird, wenn es in einem vorgegebenen Winkelbereich einfällt. Somit ergibt sich ein Winkelbereich des einfallenden Sonnenlichtes, in dem das Sonnenlicht gestreut wird, und mindestens eine weiterer Winkelbereich des einfallenden Sonnenlichts, in dem das Sonnenlicht nicht gestreut wird, bevor es auf dem Wandler auftrifft. Durch die Streuung des Sonnenlichtes in dem ersten Winkelbereich wird eine Reduzierung des auf den Wandler auftreffenden Sonnenlichtes erzielt, wodurch eine Signalüberhöhung in diesem Winkelbereich vermieden oder reduziert wird.

Insbesondere umfaßt der Winkelbereich, innerhalb dessen einfallendes Sonnenlicht gestreut wird, einen Elevationswinkelbereich der Sonne oberhalb eines vorgegebenen Grenzwinkels. Durch diese Ausgestaltung wird erreicht, dass bei einem geringen Elevationswinkel der Sonne das Sonnenlicht ohne Streuung direkt auf den Wandler trifft. Bei einem größeren Elevationswinkel der Sonne oberhalb eines vorgegebenen Grenzwinkels wird das Sonnenlicht dagegen zunächst durch den Streubereich der Abdeckung gestreut, bevor es auf den Wandler auftrifft. Da die Sonnenintensität bei großen Elevationswinkeln der Sonne höher ist als bei geringen Elevationswinkeln, wird durch die Streuung eine Signalabschwächung bei hohen Elevationswinkeln erreicht. Hintergrund für diese gewünschte Abschwächung des Signals ist, dass bei großen Elevationswinkeln zwar die Sonnenintensität höher ist, jedoch die Sonneneinstrahlung in das Fahrzeuginnere durch die Scheiben geringer ist als bei kleinen Elevationswinkeln.

Es hat sich gezeigt, dass ein Grenzwinkel im Bereich von etwa 40 bis 60 Grad besonders vorteilhaft ist. Hierbei wird eine besonders gute Linearisierung des Ausgangssignals des elektrooptischen Wandlers erreicht.

Der Streubereich der Abdeckung kann insbesondere durch eine partielle Strukturierung der Abdeckung erreicht werden. Eine solche Strukturierung läßt sich in einfacher Weise durch eine entsprechende Ausgestaltung eines Werkzeuges zur Herstellung der Abdeckung realisieren. Insbesondere kann der Streubereich durch eine erhöhte Rauhigkeit im Vergleich zu einem benachbarten Bereich der Abdeckung charakterisiert sein. Durch die Oberflächenrauhigkeit des Streubereiches wird hierbei die Lichtstreuung erreicht. Eine solche Oberflächenrauhigkeit kann ebenfalls durch eine entsprechende Rauhigkeit eines Werkzeuges zur Herstellung der Abdeckung, insbesondere eines Spritzgußwerkzeuges, realisiert werden.

Vorzugsweise ist der Streubereich auf einer dem Wandler zugewandten Seite der Abdeckung angebracht. Da die Abdeckung in der Regel im Inneren eines Fahrzeuges sichtbar ist, ergibt sich durch diese Ausgestaltung neben einer entsprechend guten Streuung durch den Streubereich auch eine optisch ansprechende Abdeckung.

Alternativ kann der Streubereich auch dadurch erzeugt werden, dass in einem vorgegebenen Bereich der Abdeckung Streuzentren im Inneren der Abdeckung vorhanden sind. Bei diesen Streuzentren kann es sich beispielsweise um Metallpartikel handeln.

Grundsätzlich kann die Abdeckung innerhalb des gesamten Wellenlängenbereichs von Sonnenlicht strahlungsdurchlässig sein. In einer vorteilhaften Ausgestaltung ist die Abdekkung jedoch nur in einem oder mehreren Wellenlängenbereichen für Sonnenlicht durchlässig. Hierbei kann beispielsweise der Wellenlängenbereich, in dem die Abdeckung für Sonnenlicht durchlässig ist, an einen Wellenlängenbereich hoher Empfindlichkeit des elektrooptischen Wandlers angepaßt werden.

In einer besonderen Ausführungsform ist vorgesehen, dass die Abdeckung infrarotdurchlässig ist. Als elektrooptischer Wandler wird hierbei ein Infrarotdetektor eingesetzt. Insbesondere kann dabei die Abdeckung für sichtbares Licht im wesentlichen undurchlässig sein, so dass im Inneren des Fahrgastraumes lediglich die Abdeckung sichtbar ist, jedoch der sich unter der Abdeckung befindliche elektrooptische Wandler dem menschlichen Auge verborgen bleibt.

Vorzugsweise ist der Signalgeber auf einem Armaturenbrett des Kraftfahrzeuges unterhalb einer Frontscheibe angeordnet. Eine Frontscheibe eines Kraftfahrzeuges ist in vielen Fällen die am stärksten geneigte Scheibe des Kraftfahrzeuges. Durch diese Anordnung des Signalgebers unterhalb der Fronscheibe wird somit sichergestellt, dass unter den verschiedensten Sonneneinstrahlwinkeln Sonnenlicht auf den elektrooptischen Wandler gelangt. Bei dem elektrooptischen Wandler kann es sich neben einem Infrarotdetektor insbesondere auch um eine Fotodiode handeln.

Die Erfindung wird nachfolgend anhand eines Ausführungsbeispiels und der Zeichnung näher beschrieben. Es zeigen:
- Fig. 1:: zwei Ansichten eines Signalgebers mit elektrooptischem Wandler und Abdeckung;
- Fig. 2:: das Meßsignal eines elektrooptischen Wandlers in Abhängigkeit vom Elevationswinkel;
- Fig. 3: die wesentlichen Komponenten einer Kraftfahrzeugklimatisierungs- und Belüftungsanlage.

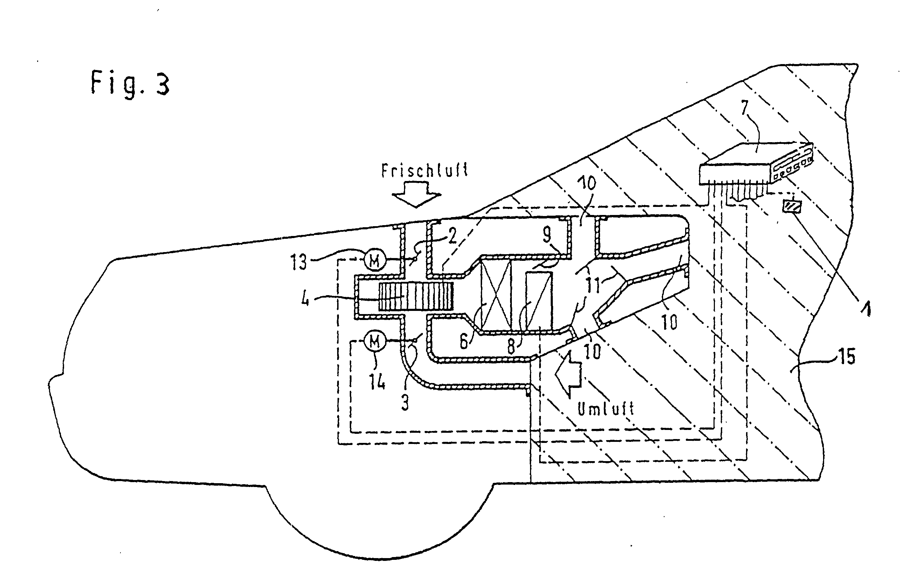

Fig. 3 zeigt ein Ausführungsbeispiel für eine Klima- und Belüftungsanlage eines Kraftfahrzeuges, in der der erfindungsgemäße Signalgeber als Sonnensensor eingesetzt wird. Über die Frischluftklappe 2 wird Frischluft aus der Umgebung des Fahrzeuges in das Kraftfahrzeug selbst angesaugt. Die Stellung der Frischluftklappe 2 wird von einen Stellmotor 13 in Abhängigkeit von elektrischen Signalen gesteuert, die vom Regel- und Bediengerät 7 ausgegeben werden. Über die Umluftklappe 3, die in Abhängigkeit von elektrischen Signalen des Regel- und Bediengerätes 7 über einen Stellmotor 14 angesteuert wird, kann Luft aus dem Fahrgastraum 15 des Kraftfahrzeugs angesaugt werden. Durch den Ventilator 4 werden Um- und Frischluft in den Fahrgastraum 15 befördert. Auf dem Weg in den Fahrgastraum 15 passiert die Luft einen Verdampfer 6 einer Kälteanlage sowie gegebenenfalls - abhängig von der Stellung einer Temperaturklappe 9 - einen Wärmetauscher 8. Im Heizbetrieb wird die Luft durch den Wärmetauscher 8 erwärmt. Über Ausströmer 10 wird die gegebenenfalls gekühlte oder erwärmte Luft dem Fahrgastraum 15 zugeführt. Die Luftverteilung kann hierbei mit Luftverteilerklappen 11 reguliert werden.

Verschiedene Sensoren, insbesondere nicht näher dargestellte Temperatursensoren und ein Sonnensensor 1, liefern IstWerte für die Klimaregelung. Sollwerte können über Bedienelemente eingestellt werden, die am Regel- und Bediengerät 7 angebracht sind. Die Verarbeitung des Signals des Sonnensensors 1 zusammen mit den anderen Temperatursignalen erfolgt über an sich bekannte Regelalgorithmen.

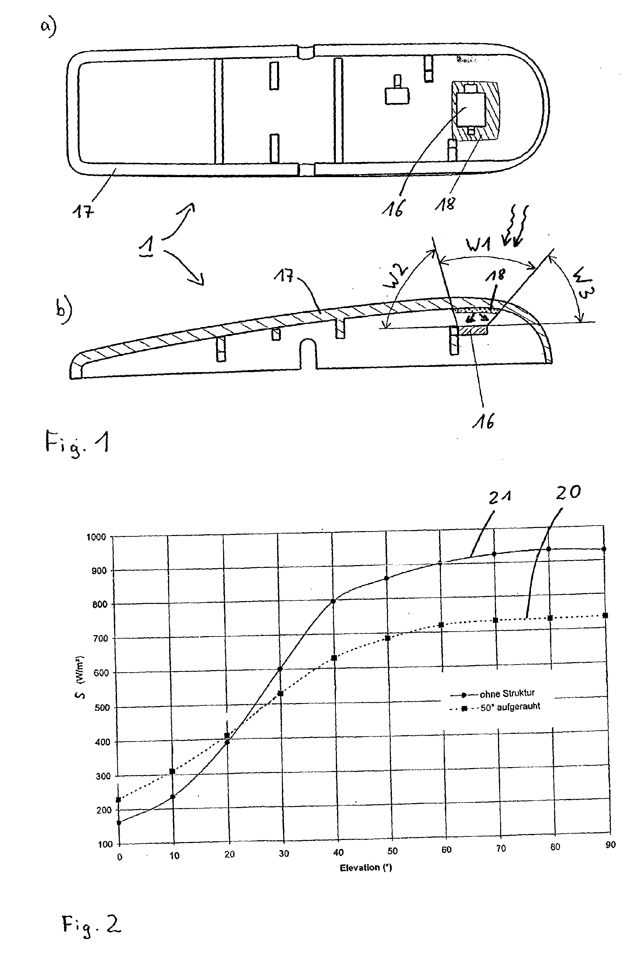

In Fig. 1 sind zwei unterschiedliche Ansichten eines Sonnensensors 1 dargestellt, der einen elektrooptischen Wandler 16 und eine Abdeckung 17 aufweist. Fig. 1b zeigt einen Längsschnitt durch den Sonnensensor, während Fig. 1a eine Ansicht von unten auf den Sonnensensor 1 zeigt. Die Abdekkung 17 des elektrooptischen Wandlers 16 weist einen Streubereich 18 auf, der ein Teilbereich der inneren Oberfläche der Abdeckung 17 ausmacht. Der Streubereich 18 weist eine erhöhte Oberflächenrauhigkeit auf im Vergleich zur verbleibenden Oberfläche der Abdeckung 17. Der Streubereich 18 ist auf der dem Wandler 16 zugewandten Seite der Abdeckung 17 angebracht. Sonnenstrahlung, die innerhalb des Winkelbereichs W1 auf den Sonnensensor 1 auftrifft, wird nun durch den Streubereich 18 gestreut, bevor sie auf den Wandler 16 gelangt. Durch die Streuung wird eine Abschwächung der Lichtintensität erreicht. Sonnenstrahlung, die außerhalb des Winkelbereichs W1 in den Winkelbereichen W2 bzw. W3 auf den Sonnensensor 1 auftrifft, kann dagegen auf den Wandler 16 gelangen, ohne den Streubereich 18 zu passieren. Innerhalb der Winkelbereiche W2 bzw. W3 auftreffende Sonnenstrahlung wird daher nicht oder aufgrund der optischen Eigenschaften der Abdeckung 17 nur in einem geringen Maße gestreut.

Die Abdeckung 17 besteht aus einem im sichtbaren Wellenlängenbereich im wesentlichen lichtundurchlässigen Kunststoffmaterial, so dass der Wandler 16 durch die Abdeckung 17 hindurch für das menschliche Auge nicht sichtbar ist. Die Abdeckung 17 wirkt hierbei gleichzeitig als Strahlungsfilter.

In Fig. 2 sind zwei Meßkurven 20, 21 dargestellt, die die Abhängigkeit eines Meßsignals eines elektrooptischen Wandlers vom Elevationswinkel der einfallenden Strahlung aufzeigt. Die Meßkurve 20 gibt dabei die Verhältnisse für einen erfindungsgemäßen Sonnensensor wieder. Bei dem erfindungsgemäßen Sonnensensor ist dabei der Wandler 16 zu dem Streubereich 18 derart angeordnet, dass einfallendes Licht oberhalb eines Elevationswinkels von 50 Grad den Streubereich 18 passiert, bevor es auf den Wandler 16 auftrifft. Die Meßkurve 21 gilt für einen Sonnensensor ohne Streubereich, ansonsten jedoch gleichen Aufbaus. Ein Vergleich der Meßkurven 20 und 21 zeigt, dass durch die erfindungsgemäße Anbringung eines Streubereichs eine Linearisierung der Meßkurve 20 sowohl im Bereich kleiner als auch großer Elevationswinkel erreicht wird. Die Meßkurve 20 gibt dabei sehr gut die Signalanforderungen wieder, die für eine gute Innentemperaturregelung mit einem Sonnensensor erwünscht sind.

## Patentansprüche

1. Signalgeber für ein Regelgerät (7) einer Kraftfahrzeugklimaanlage, der einen elektrooptischen Wandler (16) und eine strahlungsdurchlässige Abdeckung (17) des elektrooptischen Wandlers (16) aufweist, **dadurch gekennzeichnet, dass** die strahlungsdurchlässige Abdeckung (17) einen Streubereich (18) für einfallendes Sonnenlicht enthält.

2. Signalgeber nach Anspruch 1, **dadurch gekennzeichnet, dass** der Streubereich (18) und der elektrooptische Wandler (16) derart zueinander angeordnet sind, dass in einem ersten Lichteinfallswinkelbereich (W1) einfallendes Sonnenlicht durch den Streubereich (18) gestreut wird, bevor es auf den Wandler (16) auftrifft.

3. Signalgeber nach Anspruch 2, **dadurch gekennzeichnet, dass** der Winkelbereich (W1), innerhalb dessen einfallendes Sonnenlicht gestreut wird, einen Elevationswinkelbereich der Sonne oberhalb eines vorgegebenen Grenzwinkels umfaßt.

4. Signalgeber nach Anspruch 3, **dadurch gekennzeichnet, dass** der Grenzwinkel im Bereich von etwa 40° bis 60° liegt.

5. Signalgeber nach einem der vorhergehenden Ansprüche, **dadurch gekennzeichnet, dass** der Streubereich (18) strukturiert ist.

6. Signalgeber nach einem der vorhergehenden Ansprüche, **dadurch gekennzeichnet, dass** der Streubereich (18) eine erhöhte Rauhigkeit im Vergleich zu einem benachbarten Bereich der Abdeckung (17) aufweist.

7. Signalgeber nach einem der vorhergehenden Ansprüche, **dadurch gekennzeichnet, dass** der Streubereich (18) auf einer dem Wandler (16) zugewandten Seite der Abdeckung (17) angebracht ist.

8. Signalgeber nach einem der vorhergehenden Ansprüche, **dadurch gekennzeichnet, dass** der Streubereich (18) durch Streuzentren innerhalb der Abdeckung (17) erzeugt wird.

9. Signalgeber nach Anspruch 8, **dadurch gekennzeichnet, dass** die Streuzentren durch Metallpartikel gebildet werden.

10. Signalgeber nach einem der vorhergehenden Ansprüche, **dadurch gekennzeichnet, dass** die Abdeckung (17) in einem oder mehreren Wellenlängenbereichen durchlässig für Sonnenlicht ist.

11. Signalgeber nach Anspruch 10, **dadurch gekennzeichnet, dass** die Abdeckung (17) infrarotdurchlässig ist.

12. Signalgeber nach Anspruch 10 oder 11, **dadurch gekennzeichnet, dass** die Abdeckung (17) für sichtbares Licht im wesentlichen undurchlässig ist.

13. Signalgeber nach einem der vorhergehenden Ansprüche, **dadurch gekennzeichnet, dass** der Signalgeber (Sonnensensor 1) auf einem Armaturenbrett des Kraftfahrzeugs unterhalb einer Frontscheibe angeordnet ist.

14. Signalgeber nach einem der vorhergehenden Ansprüche, **dadurch gekennzeichnet, dass** der elektrooptische Wandler (16) eine Fotodiode oder ein Infrarotdetektor ist.
